**Europäisches Patentamt**

(19) **European Patent Office**

**Office européen des brevets**

(11) Numéro de publication: **0 050 998**
**B1**

(12) **FASCICULE DE BREVET EUROPEEN**

(45) Date de publication du fascicule du brevet:
**05.12.84**

(51) Int. Cl.³: **G 01 F 1/70**, G 01 P 5/18

(21) Numéro de dépôt: **81401476.7**

(22) Date de dépôt: **23.09.81**

(54) **Capteur ionique à temps de transit de type différentiel.**

(30) Priorité: **07.10.80 FR 8021400**

(43) Date de publication de la demande:
**05.05.82 Bulletin 82/18**

(45) Mention de la délivrance du brevet:
**05.12.84 Bulletin 84/49**

(84) Etats contractants désignés:
**BE DE GB IT NL SE**

(56) Documents cités:
**EP - A - 0 049 195
DE - C - 945 662
FR - A - 2 389 103
FR - A - 2 439 302
US - A - 4 056 003**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Bariol, Roger, 10-14, rue de la Source,
F-45160 Olivet (FR)**
Inventeur: **Lecomte, Jackie, 1, rue des Minimes,
F-45000 Orleans (FR)**
Inventeur: **Bouvet, Jean-Marie, 133, rue de Silly,
F-92100 Boulogne Billancourt (FR)**

(74) Mandataire: **Colas, Jean-Pierre et al, Régie Nationale
des Usines RENAULT 8 et 10 Avenue Emile Zola,
F-92109 Boulogne-Billancourt (FR)**

Description

La présente invention est relative à un capteur débitmétrique à ionisation et à son électronique de traitement associée, cet ensemble réalisant un dispositif de mesure de débit volumique d'un écoulement gazeux au moyen de déplacements d'ions selon des trajectoires sensiblement parallèles à l'écoulement.

Le capteur, objet de la présente invention, est du type anémomètre à temps de transit; il est destiné à mesurer un débit d'air en vue de contrôler la richesse du mélange air-carburant alimentant un moteur à combustion interne.

Le principe des anémomètres à temps de transit est bien connu de l'homme de l'art. Le brevet FR—A— 2 439 302 décrit un dispositif qui mesure le temps de parcours d'un jet d'ions, entraîné à la même vitesse que l'écoulement gazeux, entre une électrode d'émission et une électrode de réception. L'électrode d'émission est une pointe sur laquelle on envoie une impulsion haute tension de faible durée qui provoque l'ionisation du gaz au voisinage de celle-ci. Le nuage de gaz ionisé ainsi formé provoque, lors de son passage devant une électrode de réception, une impulsion électrique qui est détectée.

L'application de ces anémomètres à temps de transit à la mesure de débit à l'admission d'un moteur thermique rencontre plusieurs difficultés.

L'amplitude du signal détecté sur l'électrode de réception dépend à la fois de la vitesse de l'écoulement gazeux et des conditions d'ionisation, c'est-à-dire amplitude de l'impulsion haute tension et nature de la pointe d'émission. On obtient donc une information électrique dépendant de plusieurs paramètres, ce qui complique le traitement électronique.

De plus, le nuage d'ions est créé en général par une seule pointe d'émission. Le taux d'ionisation est ainsi très faible, ce qui, à faible vitesse d'écoulement, donne un signal électrique sur l'électrode de réception difficilement exploitable. Ceci limite l'étendue de mesure du capteur. Le nuage d'ions n'est pas réparti uniformément dans toute la section de la veine fluide d'écoulement, donc sa vitesse mesurée n'est pas représentative de la vitesse moyenne de l'écoulement gazeux.

Dans ce type de capteur, pour une géométrie donnée, et pour une vitesse d'écoulement assez importante, la largeur de l'impulsion haute tension qui crée le nuage d'ions n'est plus négligeable devant le temps de parcours de ce même nuage d'ions. Les phénomènes d'émission et de déplacement du nuage se superposent, ce qui est un facteur d'erreur supplémentaire. Le brevet européen EP-A- 49 195, publié le 07.04.82, apporte certaines améliorations au dispositif du brevet français ci-dessus, mais il ne permet pas de résoudre tous les problèmes précités.

On connaît par ailleurs par le brevet US-A- 4 056 003 un débitmètre ionique comportant au moins une électrode d'émission et une électrode de réception sur laquelle on mesure le courant ou la tension dû au passage du nuage d'ions engendré par l'électrode d'émission. Dans une forme particulière de réalisation, il est prévu deux électrodes de réception disposées, l'une en amont, l'autre en aval de l'électrode d'émission, et des moyens pour mesurer la différence entre les intensités des courants recueillis sur les deux électrodes de réception. Suivant ce document, une loi mathématique prédéterminée lie la tension, le courant ou la différence de courants recueilli à la vitesse d'écoulement du gaz dans le débitmètre.

Malheureusement, un tel dispositif n'est pas suffisamment précis et fiable pour mesurer les débits de gaz que l'on rencontre, par exemple, à l'admission des moteurs à combustion interne à allumage commandé, en raison du caractère pulsé et des très grandes variations de ces débits qui conduiraient en particulier, à des fluctuations et des dynamiques très élevées de la grandeur électrique mesurée.

La présente invention permet d'éviter les inconvénients des dispositifs connus précités au moyen d'un capteur ionique à temps de transit du type comportant une zone d'émission et une zone de réception comprenant deux grilles parallèles, associé à un dispositif électronique permettant d'obtenir une grandeur électrique sous forme d'une impulsion dont la largeur est fonction du débit volumique d'un fluide gazeux dans une tubulure d'admission, caractérisé en ce que les deux grilles parallèles (19, 20) de la zone de réception sont agencées pour permettre la mesure du temps de transit des particules ionisées entre lesdites deux grilles parallèles (19, 20) et en ce que chacune desdites deux grilles parallèles (19, 20) délivre des signaux appliqués à deux entrées respective (6, 7) dudit dispositif électronique (8), ce dernier constituant un système de mesure différentiel délivrant ladite impulsion.

La structure de réalisation du capteur selon l'invention comprend deux grilles de réception situées en aval du système d'émission. Le temps mesuré est le temps de passage entre ces deux grilles. On obtient un système du type différentiel car toute perturbation affectant le signal reçu sur la première grille de réception affectera aussi le signal reçu sur la deuxième grille. Après traitement électronique, le signal résultant ne sera fonction que de la vitesse d'écoulement et sera indépendant des phénomènes perturbateurs. La structure de réalisation du capteur selon l'invention comprend également un système d'émission permettant d'augmenter le taux d'ionisation et de répartir cette émission ionique dans toute la section de la veine fluide. On obtient ainsi, sur les électrodes de réception, un signal exploitable même à très faible vitesse d'écoulement, ce qui permet de satisfaire à toute l'étendue de fonctionnement d'un moteur thermique.

Le dispositif électronique associé au capteur permet en outre de fournir, au dispositif d'émission du capteur, une impulsion haute tension synchrone dont la valeur maximale est constante quelles que soient les conditions de fonctionnement. Cette disposition permet d'avoir un niveau d'ionisation constant.

La structure de réalisation du capteur ionique à temps de transit selon l'invention comporte deux domaines distincts: un domaine d'émission (E) et un domaine de réception (R), ces deux domaines étant séparés par une grille intermédiaire (Gi).

Le domaine d'émission (E) estconstitué par plusieurs électrodes d'émission équiréparties radialement dans un plan perpendiculaire à l'écoulement. Ces électrodes d'émission sont constituées par de fines aiguilles dont le rayon de courbure au sommet est de quelques dizaines de microns. Ces électrodes sont portées à un potentiel de quelques kilovolts, pendant un temps très court, par rapport à l'enveloppe extérieure du capteur qui est reliée à la masse. Par effet de pointe entre le sommet de chaque aiguille et l'enveloppe extérieure du capteur, il y a création d'un champ électrique intense qui ionise l'air. Il y a donc création d'autant de nuages d'ions qu'il y a d'électrodes d'émission dans la section droite du capteur. Cette disposition permet d'obtenir un domaine d'émission intéressant toute la veine fluide du capteur et d'avoir ainsi une répartition symétrique.

Le domaine de réception (R) est constitué par deux grilles isolées électriquement par rapport à l'enveloppe extérieure du capteur et disposées perpendiculairement au déplacement des nuages d'ions. Ces grilles de détection sont constituées par des éléments métalliques perforés tels que grillage ou tôle perforée. Les grilles de détection détectent le passage des charges électriques en transit par influence. Grâce à un circuit électronique approprié, l'instant de passage des charges est détecté.

La grille intermédiaire (Gi) séparant les domaines (E) et (R) est une grille de même type que les grilles de détection. Elle est destinée à éviter l'influence directe de l'impulsion de haute tension sur les électrodes réceptrices. En variante, les deux électrodes parallèles de réception de la zone de réception (R) peuvent être placées entre deux grilles de blindage.

Le dispositif objet de l'invention comporte, en outre, un générateur d'impulsions haute tension permettant l'ionisation et déclenchable extérieurement de façon synchrone, ainsi qu' un système électronique de traitement des signaux détectés par les grilles de réception.

L'invention sera mieux comprise à l'étude de la description détaillée de quelques modes de réalisation pris à titre d'exemples nullement limitatifs et illustrés par les dessins annexés sur lesquels:

– la figure 1 représente un schéma synoptique d'ensemble d'un capteur de débit avec l'électronique qui lui est associée,

– la figure 2 illustre la forme des signaux d'entrée et de sortie obtenus avec les éléments décrits à la figure 1,

– la figure 3 est une vue en coupe d'un capteur à temps de transit,

– la figure 4 est une variante de réalisation d'un capteur à temps de transit

– la figure 5 illustre un premier mode de réalisation du système d'ionisation du capteur,

– la figure 5a illustre un détail de réalisation d'un élément du système d'ionisation de la figure 5,

– la figure 6 illustre un deuxième mode de réalisation d'un système d'ionisation du capteur,

– la figure 7 illustre un troisième mode de réalisation d'un système d'ionisation du capteur,

– la figure 7a illustre un détail de réalisation d'un élément du système d'ionisation de la figure 7,

– la figure 8 illustre un quatrième mode de réalisation d'un système d'ionisation,

– la figure 9 représente schématiquement le dispositif électronique fournissant l'impulsion de haute tension au système d'ionisation,

– la figure 10 représente la forme des signaux apparaissant en divers points du schéma de la figure 9,

– la figure 11 représente schématiquement le dispositif électronique mesurant le temps de passage du nuage d'ions,

– la figure 12 représente la forme des signaux apparaissant en divers points du schéma de la figure 11.

Les mêmes références désignent les mêmes organes sur les différentes figures.

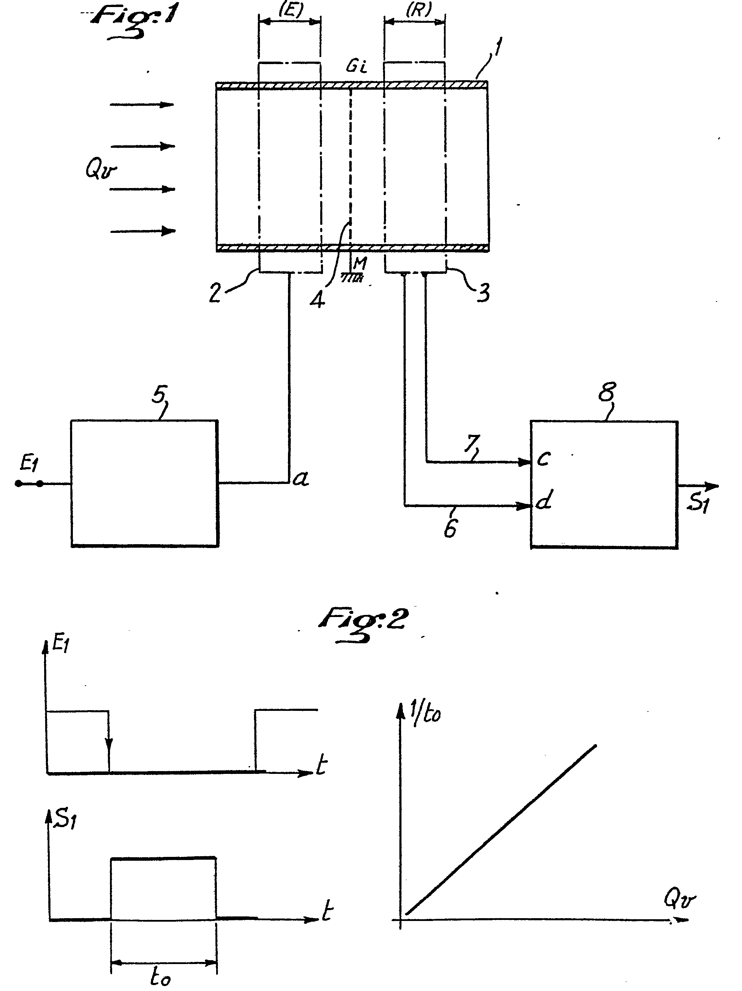

Comme représenté à la figure 1, le capteur ionique à temps de transit se compose d'une enveloppe métallique 1 reliée à la masse par la connexion M et parcourue par un gaz dont le débit volumétrique est Qv. Le corps métallique 1 comprend essentiellement deux zones de fonctionnement du capteur: une zone d'émission (E) repérée 2 et une zone de réception (R) repérée 3. Ces zones (E) et (R) sont séparées par une grille intermédiaire (Gi) repérée 4. Cette grille 4 est solidaire mécaniquement de l'enveloppe mécanique 1. Elle est également reliée à la masse électrique par la connexion M.

La zone d'émission 2 du capteur est alimentée par une impulsion haute tension issue d'un bloc de commande 5, lui-même commandé par des signaux extérieurs de commande E1.

La zone de réception 3 du capteur délivre les signaux par l'intermédiaire des connexions 6 et 7 à un bloc de traitement 8. Ce bloc de traitement 8 délivre en sortie un signal S1 pendant un temps $t_o$ proportionnellement à la grandeur Qv selon les relations fonctionnelles de la figure 2.

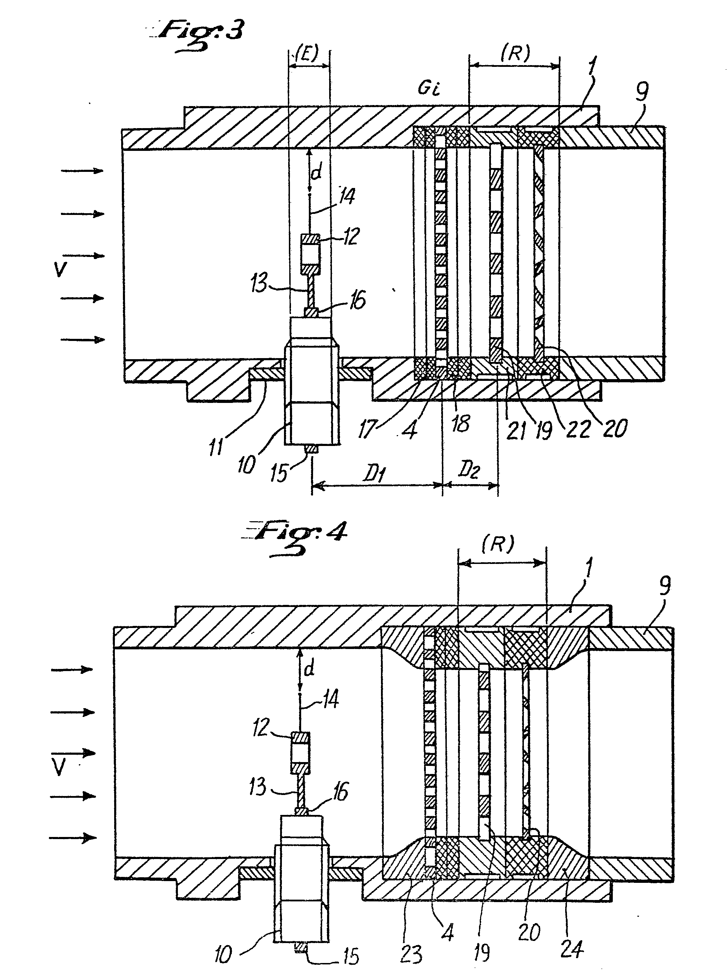

Sur la représentation schématique de la figure 3, on trouve les éléments constituant les zones d'emission (E) et de réception (R) relatifs à la figure 1.

La zone d'émission (E) est composée d'un système d'ionisation comprenant plusieurs fines aiguilles repérées 14 disposées radialement sur un organe central 12.

L'organe central 12 est tenu mécaniquement par un pivot 13 relié mécaniquement et électriquement à la borne de sortie 16 d'une traversée isolante 10. La connexion d'entrée de 10 est repérée 15.

La traversée isolante 10 amenant l'impulsion de haute tension sur les aiguilles d'ionisation 14 est fixée mécaniquement dans l'enveloppe extérieure 1 du capteur, elle est immobilisée par un écrou 11.

La grille intermédiaire Gi repérée 4 est reliée mécaniquement au corps 1 par l'intermédiaire de cales métalliques 17. De plus, ces cales métalliques 17 permettent de faire varier la distance D1 entre zone d'émission et grille intermédiaire. La grille Gi a un double rôle. D'une part, elle rend l'écoulement gazeux plus turbulent et homogène grâce à ses mailles fines. D'autre part, elle atténue notablement l'influence directe du signal haute tension rayonné sur les grilles du système de réception (R).

La zone de réception (R) comprend deux grilles de réception 19 et 20. Ces grilles sont maintenues par des rondelles isolantes 21 et 22 maintenues à l'intérieur de l'enveloppe 1 du capteur. Des cales d'épaisseur 18 permettent d'ajuster la distance D2 entre grille intermédiaire 4 et la première grille réceptrice 19.

Les grilles 19 et 20 sont reliées électriquement à une prise de sortie double, non représentée sur la figure, permettant de sortir les signaux reçus. La grille intermédiaire 4, les cales de réglage 17 et 18, les grilles de réception 19 et 20 sont maintenues en place par un embout 9, emmanché dans le corps 1 et constituant ainsi l'autre extrémité du capteur.

Sur la représentation schématique de la figure 4, où les éléments déjà décrits portent la même référence, on trouve une structure de capteur dans laquelle la zone de réception possède une section diminuée par rapport à la section de la zone d'émission. Cette disposition permet d'augmenter la vitesse de l'écoulement dans la zone de réception, donc d'obtenir un signal plus élevé sur les grilles réceptrices. Cette disposition est obtenue par des cales profilées 23 et 24 dont le profil est identique. Ces cales enserrent l'ensemble des grilles 4, 19 et 20. Cette disposition permet ainsi de mesurer un débit volumique plus faible correspondant à un moteur thermique moins puissant sans changer les dimensions extérieures du capteur, ni la structure du système d'émission. Cet aspect modulaire de la structure de ce capteur permet une grande souplesse d'adaptation.

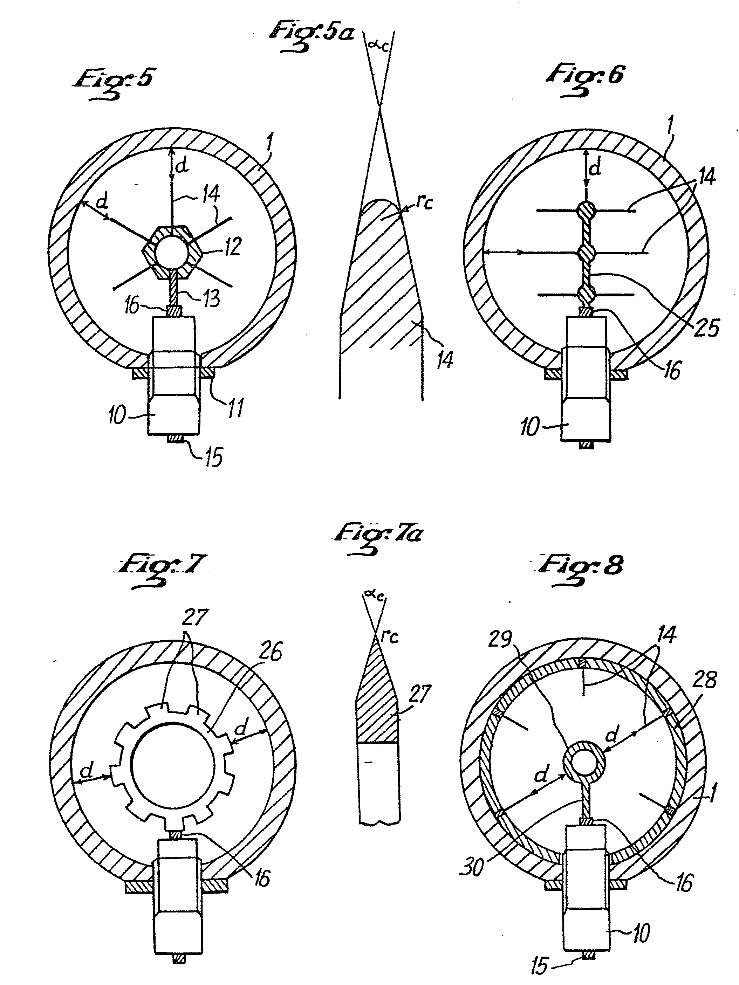

La figure 5 représente une vue en coupe de la zone d'émission (E). Le système d'ionisation de la zone d'émission se compose de plusieurs fines aiguilles 14 équiréparties radialement à l'intérieur de la veine fluide du capteur. Ces aiguilles 14 sont maintenues grâce à un organe central 12 percé en son milieu. L'organe central 12 est relié à un pivot 13 lui-même fixé à la borne de sortie 16 de la traversée isolante 10.

Les aiguilles 14 ont leur extrémité située à une distance (d) du bord intérieur du corps 1 du capteur.

La figure 5 a représente le détail de l'extrémité des aiguilles 14. Cette extrémité se caractérise par un angle au sommet $\alpha_c$ faible et un rayon de courbure $r_c$ de quelques microns. Cette disposition permet d'avoir par effet de pointe, entre l'extrémité de chaque aiguille et le corps du capteur, un champ électrique très intense qui va ioniser les molécules en déplacement. Comme il y a plusieurs aiguilles réparties dans la section du capteur, on obtient donc globalement un nuage d'ions répartis dans toute la veine fluide, ce qui améliore la précision et l'étendue de mesure du système.

La figure 6 représente un autre mode de réalisation d'un système d'ionisation de la zone d'émission (E) dans lequel les aiguilles 14 sont réparties en «rateau» autour d'un pivot central 25 relié à la borne de sortie 16 de la traversée isolante 10. Ce système à sept aiguilles est construit de façon que l'extrémité de ces sept aiguilles forme un cercle concentrique situé à une distance $\underline{d}$ de l'intérieur du corps 1 du capteur. L'extrémité des aiguilles 14 de la figure 6 a le même profil que celui indiqué à la figure 5a.

La figure 7 représente un autre mode de réalisation d'un système d'ionisation de la zone d'émission (E) dans lequel on utilise une rondelle crénelée 26 comportant un certain nombre de cannelures 27 réparties uniformément à sa périphérie. Ces cannelures 27 sont taillées en biseau de façon à obtenir à leur extrémité un profil d'angle au sommet et de rayon de courbure identique à celui des aiguilles décrit figure 5a.

La figure 8 représente un autre mode de réalisation de système d'ionisation. Les aiguilles 14 sont fixées radialement à l'intérieur d'une couronne métallique 28 emmanchée à l'intérieur de l'enveloppe 1 du capteur. La partie centrale comporte un cylindre creux 29 fixé à la borne de sortie 16 par l'intermédiaire d'un pivot 30. Contrainement aux dispositifs décrits aux figures 5, 6 et 7, il est nécessaire d'envoyer sur la borne 15 de la traversée 10 du dispositif de la figure 8 une impulsion de haute tension négative par rapport à l'enveloppe 1 du capteur reliée à la masse. Il y a donc entre chaque extrémité de pointe et la partie centrale 29 un champ électrique positif qui crée des ions positifs.

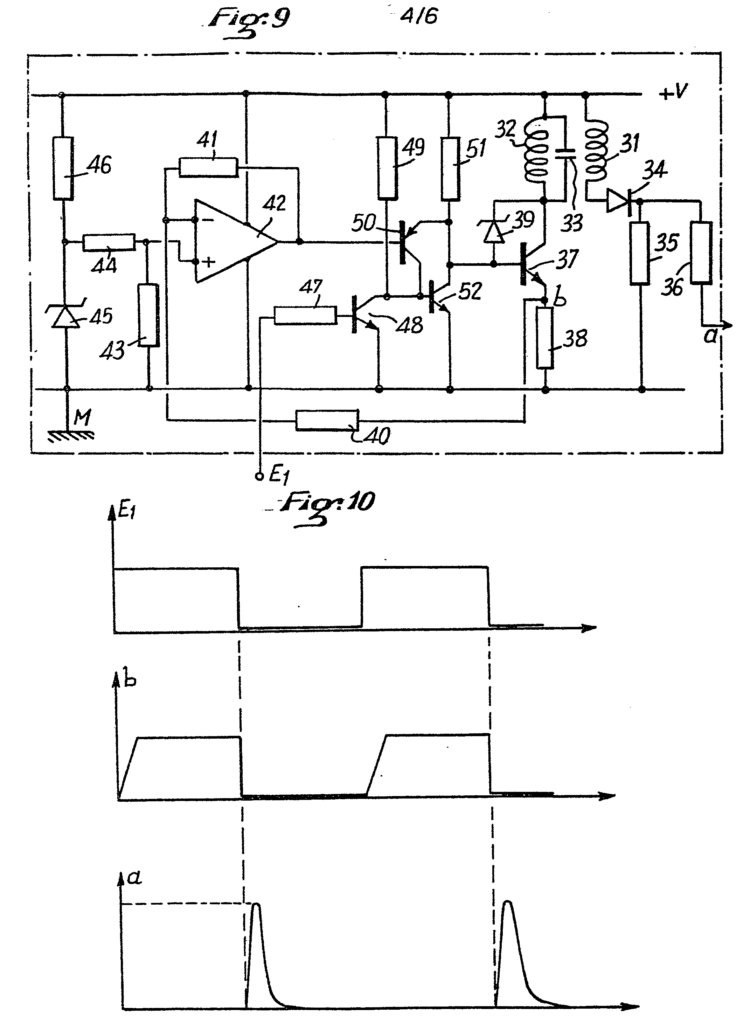

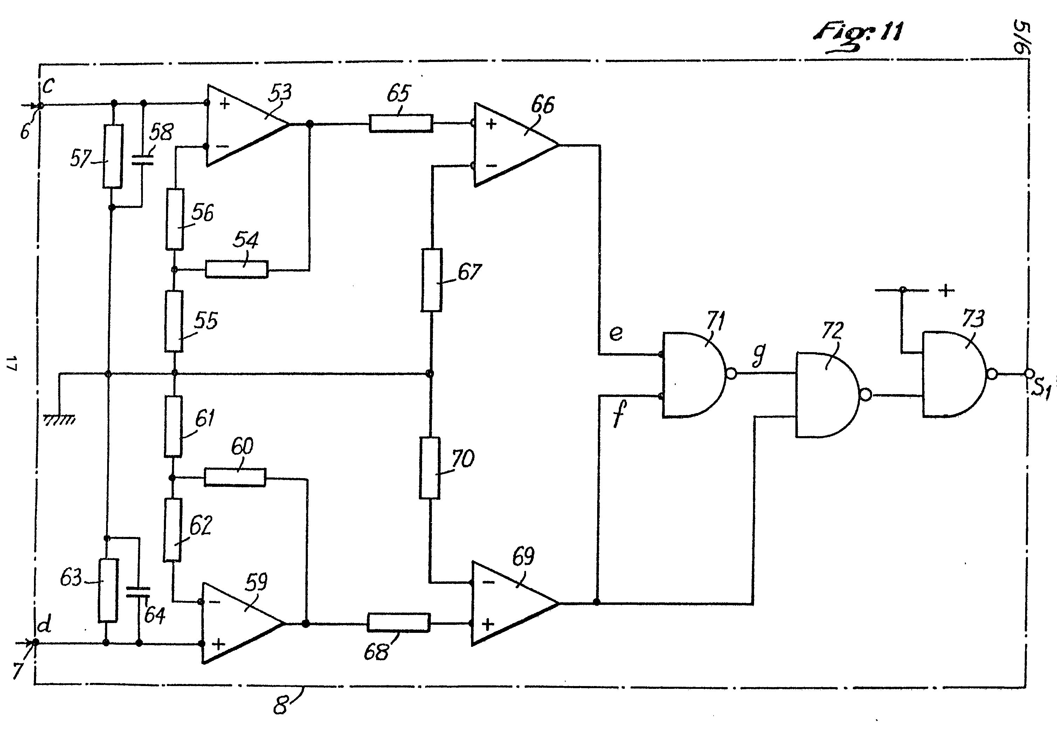

Sur la figure 9, se trouvent représentés schématiquement les éléments essentiels du module 5 délivrant des impulsions haute tension $\underline{a}$ à partir des signaux de commande externe E1 visible sur la figure 10.

L'impulsion haute tension est fournie par un secondaire de transformateur 31 dont le primaire 32 est commandé par un transistor repéré 37. Une capacité 33 en parallèle sur l'enroulement primaire 32 permet d'amortir légèrement les oscillations obtenues aux bornes de l'enroulement secondaire 31. Une diode 34 suivie d'une résistance 35 reliée à la masse permet à la fois de charger le circuit secondaire et d'obtenir, dans le cas de branchement de 34 comme indiqué à la figure 9, une impulsion positive par rapport à la masse M. Cette impulsion positive est envoyée à travers une résistance de protection 36 sur un des systèmes d'ionisation précédemment décrits.

Dans l'émetteur du transistor 37 se trouve une résistance 38 reliée à la masse. Le signal $\underline{b}$ apparaissant aux bornes de 38 est donc représentatif du courant circulant dans l'enroulement primaire 32 quand le transistor 37 est conducteur. Le signal $\underline{b}$ issu de 38, et visible à la figure 10, est envoyé sur l'entrée négative d'un amplificateur 42 dont le gain de boucle est fonction des résistance 40 et 41. Sur l'entrée positive de 42 est envoyée une tension de référence déterminée par les résistances 43 et 44 à partir d'une tension stabilisée par une diode Zéner 45 en série avec une résistance 46.

Le signal issu de l'amplificateur 42 commande la base d'un transistor 50 qui, par l'intermédiaire de la résistance de charge 51, permet de régler le courant de base du transistor 37, donc le courant circulant dans l'enroulement primaire 32.

Le signal de commande E1 représenté à la figure 10 commande, par l'intermédiaire d'une résistance de base 47, un transistor 48 chargé par une résistance 49. Le signal issu du collecteur de 48 commande la base d'un transistor 52 chargé par la résistance 51. Les transistors 48 et 50 permettent la conduction ou le blocage du transistor 37. Le courant de conduction de 37 est régulé à une valeur déterminée grâce aux éléments de la boucle de régulation commandant le transistor 50. Une diode Zéner 39, placée entre le collecteur et la base du transistor 37, permet de protéger celui-ci contre la surtension apparaissant aux bornes de l'enroulement primaire 32.

On voit donc que, grâce à ce dispositif de régulation de courant au primaire 32, l'impulsion de haute tension représentée en a figure 10 a une amplitude constante.

Il est à remarquer que, pour obtenir une impulsion haute tension négative nécessaire à un dispositif d'ionisation tel que celui représenté à la figure 8, il suffit d'inverser le sens de branchement de la diode 34 ainsi que celui des fils d'alimentation de l'enroulement secondaire 31.

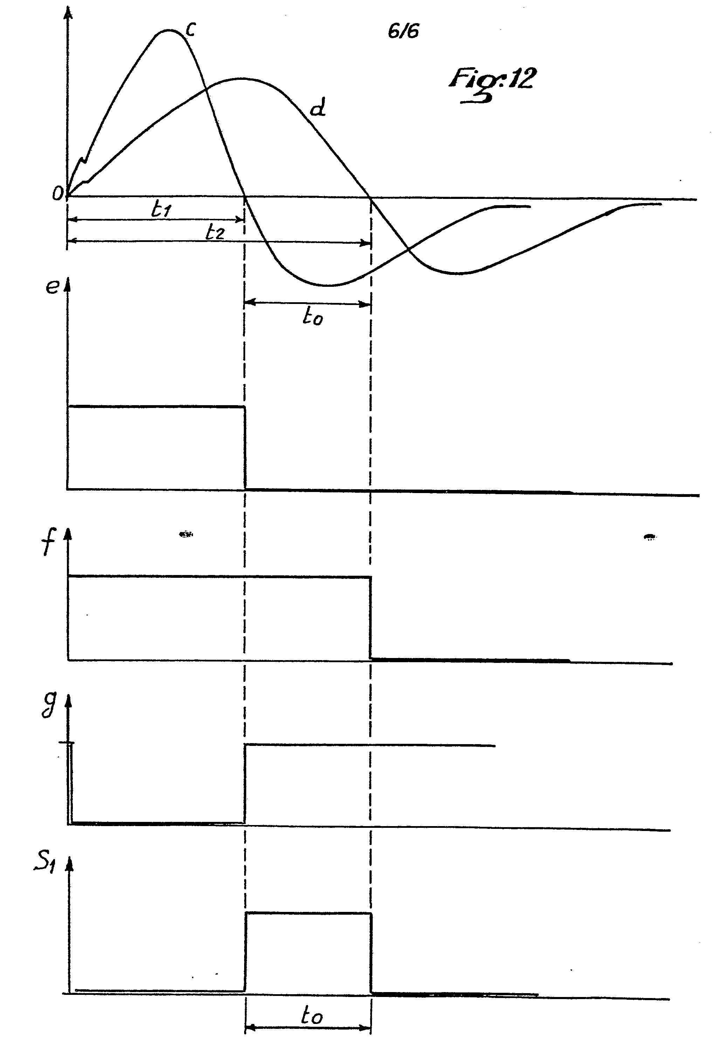

Sur la figure 11 se trouvent représentés schématiquement les éléments essentiels du bloc 8 de la figure 1 qui délivre en sortie un signal S1 dont la largeur correspond au temps de passage des ions entre les deux grilles réceptrices 19 et 20.

Le signal obtenu sur la première grille réceptrice 19 est transmis par la connexion 6 sur la borne positive d'un amplificateur opérationnel 53. L'impédance d'entrée de cet élément 53 est déterminée par la résistance 57 et la capacité 58 montées en parallèle. Le signal c apparaissant sur la grille 19 est représenté à la figure 12. Le gain c.e l'amplificateur 53 est réglé par les résistance 54 et 55; la résistance 56 reliée à la borne négative de 53 permet d'équilibrer l'impédance d'entrée. Le signal amplifié issu de 53 est envoyé sur un amplificateur 66 par l'intermédiaire d'une résistance 65 reliée à l'entrée positive. L'élément 66 forme un comparateur à zéro de grand gain grâce à la résistance 67 reliant l'entrée négative de 66 à la masse.

A la sortie du comparateur 66, on obtient un signal e représenté à la figure 12 dont la largeur t1 correspond au temps pendant lequel le signal c issu de la grille 19 est supérieur à zéro. L'instant de passage à zéro du signal c correspond à l'instant de passage du barycentre du nuage d'ions dans le plan de la grille 19.

Le signal obtenu sur la deuxième grille de réception 20 est transmis par la connexion 7 sur l'entrée positive d'un amplificateur opérationnel 59. L'impédance d'entrée de l'amplificateur 59 est déterminée par les éléments 63 et 64 montés en parallèle. La résistance 62 reliée à l'entrée négative de 59 permet d'équilibrer l'impédance d'entrée. Le signal d apparaissant sur la grille 20 est représenté à la figure 12. Ce signal est amplifié grâce à l'amplificateur 59 dont le gain de boucle est réglé par les résistances 60 et 61. Le signal amplifié issu de 59 est envoyé, par l'intermédiaire d'une résistance de liaison 68, sur l'entrée positive d'un amplificateur 69 formant comparateur à zéro grâce à la résistance 70 branchée entre l'entrée négative de 69 et la masse.

A la sortie du comparateur 69, on obtient un signal f représenté figure 12 dont la largeur t2 correspond au temps pendant lequel le signal d issu de la grille 20 est positif. L'instant de passage à zéro du signal d correspond à l'instant de passage du barycentre du nuage d'ions dans le plan de la grille 20.

Au moyen de circuits logiques 71, 72 et 73 réalisant la fonction «NAND», on obtient en sortie du bloc 8 un signal S1 dont la largeur est to = t2 – t1 correspondant au temps de passage du nuage d'ions entre les grilles 19 et 20.

On obtient finalement un capteur ionique associé à deux modules électroniques de commande et de détection permettant d'obtenir un signal de sortie dont la largeur est fonction du débit volumique circulant dans la section du capteur. Le traitement du signal de sortie peut être effectué avec une grande précision de calcul grâce aux possibilités des systèmes microprocesseurs actuels. Les modules alimentent le système d'ionisation, d'une part, et traitant les signaux en provenance de la zone de réception, d'autre part, fonctionnent en monotension, ce qui correspond parfaitement aux impératifs de l'électronique automobile. La structure modulaire du capteur permet une grande souplesse d'adaptation à la mesure de différentes gammes de débit.

La mesure différentielle du temps de passage dans la zone de réception permet de s'affranchir d'un certain nombre de phénomènes perturbateurs.

Bien entendu, l'invention n'est nullement limitée aux modes de réalisation représentés et décrits. En particulier, en ce qui concerne la zone de réception (R) de la figure 1, la théorie indique et l'expérience confirme que d'autres formes d'électrodes de réception peuvent être envisagées. Ces électrodes, placées dans la section droite du capteur, peuvent se présenter sous forme d'anneaux ou de grilles montées sur un anneau. Les grilles de réception peuvent également avoir un profil curviligne. Ces électrodes de réception peuvent aussi être séparées par une grille intermédiaire reliée à la masse électrique du capteur.

**Revendications**

1. Capteur ionique à temps de transit du type comportant une zone d'émission (E) et une zone de réception (R) comprenant deux grilles parallèles (19, 20), associé à un dispositif électronique (8) permettant d'obtenir une grandeur électrique sous forme d'une impulsion dont la largeur est fonction du débit volumique d'un fluide gazeux dans une tubulure d'admission, caractérisé en ce que les deux grilles parallèles (19, 20) de la zone de réception sont agencées pour permettre la mesure du temps de transit des particules ionisées entre lesdites deux grilles parallèles (19, 20) et en ce que chacune desdites deux grilles parallèles (19, 20) délivre des signaux appliqués à deux entrées respective (6, 7) dudit dispositif électronique (8), ce dernier constituant un système de mesure différentiel (8) délivrant ladite impulsion.

2. Capteur ionique à temps de transit suivant la revendication 1, caractérisé par une grille intermédiaire ou grille de blindage (4) séparant la zone d'émission (E) de la zone de réception (R).

3. Capteur ionique à temps de transit suivant la revendication 1 ou 2, caractérisé en ce que la zone d'émission (E) comprend une multiplicité d'électrodes d'émission (14, 27) équiréparties radialement dans un plan perpendiculaire à l'écoulement du fluide gazeux.

4. Capteur ionique à temps de transit suivant la revendication 3, caractérisé en ce que lesdites électrodes d'émission (14) sont au nombre de cinq et sont supportées soit par un organe central (12), soit fixées radialement à l'intérieur d'une couronne métallique (28) emmanchée à l'intérieur de l'enveloppe (1) du capteur.

5. Capteur ionique à temps de transit suivant la revendication 3, caractérisé en ce que lesdites électrodes d'émission (14) sont au nombre de sept et réparties en «rateau» autour d'un pivot central (25) relié à la borne de sortie (16) d'une traversée isolante (10) de façon que les extrémités libres de ces sept électrodes soient réparties sur un cercle concentrique à l'enveloppe (1) du capteur.

6. Capteur ionique à temps de transit suivant la revendication 3, caractérisé en ce que lesdites électrodes d'émission (27) sont constituées par l'extrémité extérieure taillée en biseau de cannelures ménagées uniformément à la périphérie d'une rondelle crénelée (26).

7. Capteur ionique à temps de transit suivant l'une quelconque des revendications 1 à 6, caractérisé en ce que la section de la zone de réception (R) est réduite par rapport à celle de la zone d'émission (E) par interposition de cales profilées (23, 24) dont le profil est identique pour enserrer l'ensemble des grilles (4, 19, 20).

8. Capteur ionique à temps de transit suivant l'une quelconque des revendications 1 à 7, caractérisé en ce que les deux électrodes parallèles de réception de la zone de réception (R) sont placées chacune entre deux grilles de blindage.

9. Capteur ionique à temps de transit suivant l'une quelconque des revendications 1 à 8, caractérisé en ce que les électrodes de réception de la zone de réception (R) sont constituées par deux profils annulaires placés perpendiculairement au sens d'écoulement du fluide gazeux.

10. Capteur ionique à temps de transit suivant l'une quelconque des revendications 1 à 9, caractérisé en ce que l'électronique associée comporte une boucle de régulation (40, 41, 42, 50) permettant de réguler le signal haute tension appliqué aux électrodes à une valeur déterminée.

**Patentansprüche**

1. Ionen-Laufzeitmesswertgeber mit einem Emissionsbereich (E) und einem Empfangsbereich (R), der zwei parallele Gitter (19, 20) aufweist, die einer elektronischen Anordnung (8) zugeordnet sind, die die Erzeugung einer elektrischen Grösse in Form eines Impulses ermöglicht, dessen Breite eine Funktion der Durchströmmenge eines gasförmigen Fluids in einer Einlassleitung ist, dadurch gekennzeichnet, dass die beiden parallelen Gitter (19, 20) des Empfangsbereiches derart angeordnet sind, dass sie die Messung ermöglichen der Laufzeit von ionisierten Teilchen zwischen den beiden parallelen Gittern (19, 20) und dass jedes der beiden parallelen Gitter (19, 20) Signale abgibt, die den entsprechenden Eingängen (6, 7) der elektronischen Anordnung (8) zugeführt werden, welch letztere ein Differenzmesssystem (8) darstellt zur Erzeugung des Impulses.

2. Ionen-Laufzeitmesswertgeber nach Anspruch 1, dadurch gekennzeichnet, dass ein Zwischengitter oder Abschirmgitter (4) den Emissionsbereich (E) und den Empfangsbereich (R) trennt.

3. Ionen-Laufzeitmesswertgeber nach Ansprüchen 1 und 2, dadurch gekennzeichnet, dass der Emissionsbereich (E) eine Vielzahl von Emissions-Elektroden (14, 27) aufweist, die radial in einer senkrechten Ebene zur Fliessrichtung des gasförmigen Fluids gleichförmig angeordnet sind.

4. Ionen-Laufzeitmesswertgeber nach Anspruch 3, dadurch gekennzeichnet, dass fünf Emissionselektroden (14) vorgesehen sind, die entweder von einem Mittelteil (12) getragen sind oder radial im Inneren eines metallischen Rings (28) angeordnet sind, der im Pressitz im Inneren des Gehäuses (1) des Messwertgebers angeordnet ist.

5. Ionen-Laufzeitmesswertgeber nach Anspruch 3, dadurch gekennzeichnet, dass sieben Emissionselektroden (14) vorgesehen sind, die kammförmig um ein zentrales Gelenk (25) angeordnet sind, das mit dem Ausgangsanschluss (16) einer isolierten Strebe (10) derart verbunden ist, dass die freien Enden der sieben Elektroden entlang eines konzentrischen Kreises zum Gehäuse (1) des Messwertgebers verteilt sind.

6. Ionen-Laufzeitmesswertgeber nach Anspruch 3, dadurch gekennzeichnet, dass die Emissionselektroden (27) aus den äusseren schräg zulaufenden Enden von Rillen bestehen, die gleichmässig entlang des Umfangs eines gezackten Rings (26) angeordnet sind.

7. Ionen-Laufzeitmesswertgeber nach einem der Ansprüche 1 bis 6, dadurch gekennzeichnet, dass der Querschnitt des Empfangsbereiches (R) verringert ist bezüglich desjenigen des Emissionsbereiches (E) durch Einsetzen von profilierten Einsatzstücken (23, 24) mit gleichem Profil zur Klemmaufnahme der Gesamtheit der Gitter (4, 19, 20).

8. Ionen-Laufzeitmesswertgeber nach einem der Ansprüche 1 bis 7, dadurch gekennzeichnet, dass die beiden parallelen Empfangselektroden des Empfangsbereiches (R) jeweils zwischen zwei Abschirmgittern angeordnet sind.

9. Ionen-Laufzeitmesswertgeber nach einem der Ansprüche 1 bis 8, dadurch gekennzeichnet, dass die Empfangselektroden des Empfangsbereiches (R) aus zwei ringförmigen Profilen bestehen, die senkrecht zur Durchstörmungsrichtung des gasförmigen Fluids angeordnet sind.

10. Ionen-Laufzeitmesswertgeber nach einem der Ansprüche 1 bis 9, dadurch gekennzeichnet, dass die zugehörige elektronische Schaltung eine Regelschleife (40, 41, 42, 50) aufweist zur Einstellung des Hochspannungssignals für die Elektroden auf einen vorgegebenen Wert.

## Claims

1. A transit time ionic detector of the type comprising an emitting region (E) and a receiving region (R) comprising two parallel grids (19, 20), associated with an electronic apparatus (8) for producing an electrical parameter in the form of a pulse, the width of which is depentent on the volume flow rate of gaseous fluid in an intake duct, characterised in that the two parallel grids (19, 20) of the reveiving region are arranged to permit measurement of the transit time of the ionised particles between said parallel grids (19, 20) and that each of said parallel grids (19, 20) supplies signals which are applied to two respective inputs (6, 7) of said electronic apparatus (8), the latter constituting a differential measuring system (8) supplying said pulse.

2. A transit time ionic detector according to claim 1 characterised by an intermediate grid or screening grid (4) separating the emitting region (E) from the receiving region (R).

3. A transit time ionic detector according to claim 1 or claim 2 characterised in that the emitting region (E) comprises a multiplicity of emitting electrodes (14, 27) which are equally distributed radially in a plane perpendicular to the flow of the gaseous fluid.

4. A transit time ionic detector according to claim 3 characterised in that said emitting electrodes (14) are five in number and are either supported by a central member (12) or are fixed radially inside a metal ring (28) fitted inside the casing (1) of the detector.

5. A transit time ionic detector according to claim 3 characterised in that said emitting electrodes (14) are seven in number and are distributed in a 'rake' configuration around a central pivot (25) connected to the output terminal (16) of an insulating feed-through means (10) in such a way that the free ends of said seven electrodes are distributed around a circle which is concentric to the casing (1) of the detector.

6. A transit time ionic detector according to claim 3 characterised in that said emitting electrodes (27) are formed by the outward bevelled end of grooves which are formed uniformly at the periphery of a notched disc (26).

7. A transit time ionic detector according to any one of claims 1 to 6 characterised in that the section of the receiving region (R) is reduced with respect to that of the emitting region (E) by the interposition of shaped wedge portions (23, 24), the profile of which is identical, to hold the assembly of the grids (4, 19, 20) firmly together.

8. A transit time ionic detector according to any one of claims 1 to 7 characterised in that the two parallel receiving electrodes of the receiving region (R) are each disposed between to screening grids.

9. A transit time ionic detector according to any one of claims 1 to 8 characterised in that receiving electrodes of the receiving region (R) are formed by two annular shaped members which are disposed perpendicularly to the direction of flow of the gaseous fluid.

10. A transit time ionic detector according to any one of claims 1 to 9 characterised in that the associated electronic apparatus comprises a regulating loop (40, 41, 42, 50) for regulating the high voltage signal applied to the electrodes, to a given value.

Fig:1

Fig:2

**Fig:3**

**Fig:4**

11

Fig.5

Fig.5a

Fig.6

Fig.7

Fig.7a

Fig.8

**Fig:9**  4/6

**Fig:10**

Fig.11

*Fig.12*